# EUROPÄISCHE PATENTSCHRIFT

(11) **EP 4 384 026 B1**
(45) Veröffentlichungstag und Bekanntmachung des Hinweises auf die Patenterteilung: **21.08.2024**
(21) Anmeldenummer: 22772783.1
(22) Anmeldetag: 08.09.2022
(51) Int. Cl.: A23L 15/10, A47J 29/02

(54) **VORRICHTUNG ZUM GAREN EINER SPEISE**
DEVICE FOR COOKING FOOD
DISPOSITIF DE CUISSON D'ALIMENTS

(30) Priorität: 14.09.2021 DE 102021123790
(43) Veröffentlichungstag der Anmeldung: 19.06.2024
(73) Patentinhaber: GMS - Geräte, Maschinen, Systeme - Handelsgesellschaft mbH, 47809 Krefeld (DE)
(72) Erfinder: HOENEN, Gerhard, 47802 Krefeld (DE)
(74) Vertreter: Dammertz, Ulrich
(86) Internationale Anmeldenummer: PCT/DE2022/100665
(87) Internationale Veröffentlichungsnummer: WO 2023/041108

(56) Entgegenhaltungen:
- DE-A1- 2 134 741
- US-A- 3 374 728
- US-A- 3 505 948

## Beschreibung

Die Erfindung betrifft eine Vorrichtung zum Garen einer Speise, insbesondere einer zu garenden Masse, die Ei und/oder Ei-Teilfraktionen aufweist oder aus diesen Bestandteilen gebildet ist, nach dem Oberbegriff von Anspruch 1.

Nach dem Stand der Technik ist es bekannt, eine garfähige Masse, die Ei und/oder Ei-Teilfraktionen aufweist oder aus diesen Bestandteilen gebildet ist, in einer zylinderförmigen Vorrichtung durch Garen zuzubereiten, wobei diese Vorrichtung aus einem Außenrohr und einem darin einsetzbaren Innenrohr besteht. Beispielsweise wird eine solche Vorrichtung zur Herstellung von sogenanntem "Stangenei" verwendet. Insbesondere für den Fall, dass eine solche Vorrichtung nicht industriell eingesetzt und stattdessen von Privatpersonen manuell verwendet wird, ist der Gebrauch einer solchen Vorrichtung in der Praxis dahingehend problematisch, dass das Innenrohr, wenn es innerhalb des Außenrohrs eingebracht ist, dann in dem Außenrohr präzise und zentrisch innerhalb davon positioniert bleibt. Weiterhin ist bei einer solchen Vorrichtung problematisch, dass der Ringspalt, der sich zwischen dem Außenrohr und dem darin eingesetzten Innenrohr bildet, in einfacher Weise mit der zu garenden Masse befüllt werden kann.

DE 21 34 741 A zeigt eine Vorrichtung zum Garen einer Speise nach dem Oberbegriff von Anspruch 1. Diese Vorrichtung dient zum industriellen Herstellen eines unverpackten Eierzeugnisses, das aus einem zylindrischen Kern aus koagulierter Eidottermasse und einer diesen umgebenden Hülle aus koagulierter Eiweißmasse besteht. Entsprechend werden die einzelnen Komponenten dieser Vorrichtung in deren Betrieb maschinell gesteuert bzw. bewegt.

Entsprechend liegt der Erfindung die Aufgabe zugrunde, die vorstehend genannten Probleme für eine Vorrichtung zum Garen einer Speise zu überwinden.

Die obige Aufgabe wird durch eine Vorrichtung mit den Merkmalen von Anspruch 1 gelöst. Vorteilhafte Weiterbildungen der Erfindung sind Gegenstand der abhängigen Ansprüche.

Eine erfindungsgemäße Vorrichtung dient zum Garen einer Speise, insbesondere einer zu garenden Masse, die Ei und/oder Ei-Teilfraktionen aufweist oder aus diesen Bestandteilen gebildet ist. Beispielsweise kann diese Vorrichtung für die Zubereitung von sog. "Stangenei" eingesetzt werden. Jedenfalls umfasst die erfindungsgemäße Vorrichtung ein längliches Außenrohr, das an seinem unteren Ende verschlossen werden kann, und ein längliches Innenrohr, dessen Außendurchmesser kleiner als der Innendurchmesser des Außenrohrs ist, so dass das Innenrohr in Längsrichtung in das Außenrohr eingesetzt werden kann und sich dabei zwischen dem Innenrohr und dem Außenrohr ein Ringspalt bildet. Des Weiteren umfasst die Vorrichtung ein Abschlussstück, das auf ein offenes oberes Ende des Außenrohrs aufgesetzt und daran befestigt werden kann.

Die erfindungsgemäße Vorrichtung zeichnet sich dadurch aus, dass in bzw. an einer Stirnseite des Abschlussstücks zumindest eine Durchlassöffnung ausgebildet ist, die mit dem zwischen dem Innenrohr und dem Außenrohr gebildeten Ringspalt fluchtet, derart, dass der Ringspalt, wenn das Abschlussstück auf das obere Ende des Außenrohrs aufgesetzt ist, von außen durch die zumindest eine Durchlassöffnung befüllt werden kann. Das Abschlussstück ist an seiner oberen Seite becherförmig und somit offen ausgebildet, wobei in einem inneren Bereich des Abschlussstücks senkrechte Schottwände vorgesehen sind. In der Stirnseite des Abschlussstücks sind eine Mehrzahl von Durchlassöffnungen ausgebildet, die mit dem zwischen dem Innenrohr und dem Außenrohr gebildeten Ringspalt fluchten, wobei zumindest eine Durchlassöffnung durch die Schottwände fluidtechnisch von den übrigen Durchlassöffnungen abgegrenzt ist, so dass diese Durchlassöffnung die Funktion einer Lüftungsöffnung erfüllt, wenn der Ringspalt durch die übrigen Durchlassöffnungen mit einer zu garenden Masse befüllt wird. In vorteilhafter Weiterbildung der Erfindung ist das Innenrohr, wenn das Abschlussstück auf das obere Ende des Außenrohrs aufgesetzt ist, durch das Abschlussstück zentrisch innerhalb des Außenrohrs gehalten.

Mit Hilfe der erfindungsgemäßen Vorrichtung wird erreicht, dass eine Handhabung bzw. exakte Positionierung des Innenrohrs relativ zum Außenrohr, nämlich zentrisch innerhalb des Außenrohrs, mit Hilfe des Abschlussstücks wesentlich vereinfacht wird. Das Abschlussstück dient dazu, dass der Ringspalt, der sich bestimmungsgemäß zwischen dem Außenrohr und dem darin eingesetzten Innenrohr bildet, solange das Innenrohr innerhalb des Außenrohrs eingesetzt ist, auch im praktischen Einsatz der Vorrichtung gleichförmige Maße annimmt bzw. beibehält, und in gleicher Weise auch dazu, dass dieser Ringspalt durch die zumindest eine Durchlassöffnung des Abschlussstücks in einfacher Weise mit der zu garenden Speise bzw. Masse von außen befüllt werden kann.

In vorteilhafter Weiterbildung der Erfindung kann das Abschlussstück an seiner Stirnseite eine zentrische Führungsöffnung aufweisen, deren Innendurchmesser an einen Außendurchmesser des Innenrohrs angepasst ist, wobei das Innenrohr eine größere Länge als das Außenrohr hat und das Innenrohr, wenn es in das Außenrohr eingesetzt ist, aus dem Außenrohr nach oben herausragt und dabei von der zentrischen Führungsöffnung eingefasst ist. Durch ein Halten des Innenrohrs mittels der zentrischen Führungsöffnung wird mit mechanisch einfachen und preiswerten Mitteln eine exakte Positionierung des Innenrohrs zentrisch innerhalb des Außenrohrs erreicht.

In vorteilhafter Weiterbildung der Erfindung kann das Innenrohr, wenn es zentrisch innerhalb des Außenrohrs gehalten ist, durch die zentrische Führungsöffnung des Abschlussstücks nach oben aus dem Außenrohr herausgenommen werden. In dieser Weise ist für die erfindungsgemäße Vorrichtung gewährleistet, dass das Innenrohr in einfacher Weise auch wieder aus dem Außenrohr entfernt werden kann und somit nur solange innerhalb des Außenrohrs aufgenommen ist bzw. darin verbleibt, wie es für das Garen der Speise erforderlich bzw. gewünscht ist.

Dadurch, dass in der Stirnseite des Abschlussstücks eine Mehrzahl von Durchlassöffnungen ausgebildet sind, die mit dem zwischen dem Innenrohr und dem Außenrohr gebildeten Ringspalt fluchten, und dass hierbei zumindest eine dieser Durchlassöffnungen durch Schottwände fluidtechnisch von den übrigen Durchlassöffnungen abgegrenzt ist, so dass diese Durchlassöffnung die Funktion einer Lüftungsöffnung erfüllt, wenn der Ringspalt durch die übrigen Durchlassöffnungen mit einer zu garenden Masse befüllt wird, wird eine fluidtechnische Abgrenzung von zumindest einer Durchlassöffnung von den übrigen Durchlassöffnungen erreicht. Dies führt zu dem Vorteil, dass der Ringspalt mit der zu garenden Speise bzw. Masse homogen und insbesondere ohne Lufteinschlüsse von außen befüllt werden kann, weil nämlich die in dem Ringspalt befindliche Luft, die beim Befüllen des Ringspalts mit der zu garenden Speise bzw. Masse verdrängt wird, dann durch die besagte Durchlassöffnung aus dem Ringspalt heraus nach außen bzw. oben entweichen kann.

In vorteilhafter Weiterbildung der Erfindung kann in einer Stirnseite des Abschlussstücks zumindest eine Aufnahmeöffnung ausgebildet sein, in der ein Thermoelement oder ein Schwimmer einbringbar ist. In dieser Weise ist es möglich, ein Thermoelement beispielsweise in Form eines Thermometers in Stabform in den zwischen dem Innenrohr und dem Außenrohr gebildeten Ringspalt hineinzubringen, um damit die Temperatur der zu garenden Masse, die sich innerhalb des Ringspalts befindet, zu messen. In gleicher Weise kann auch ein Schwimmer, zweckmäßigerweise in Stabform und aus temperaturbeständigem Kunststoff hergestellt, in die Aufnahmeöffnung eingebracht werden, um somit mit Hilfe dieses Schwimmers eine Information über den Füllstand der zu garenden Masse innerhalb des Ringspalts zu erhalten.

In vorteilhafter Weiterbildung der Erfindung kann ein insbesondere stabförmig ausgebildetes Thermoelement gleichzeitig auch die Funktion eines Schwimmers übernehmen. Anders ausgedrückt, ist für diesen Fall ein stabförmiges Thermoelement bzw. Thermometer gleichzeitig integriert als Schwimmer ausgebildet. In Folge dessen ist es möglich, im Betrieb der erfindungsgemäßen Vorrichtung durch den Einsatz eines solchen Thermoelements in der Aufnahmeöffnung gleichzeitig Informationen bezüglich Temperatur und Füllstand einer zu garenden Masse, die in den zwischen dem Innenrohr und dem Außenrohr gebildeten Ringspalt eingefüllt worden ist, zu gewinnen.

In vorteilhafter Weiterbildung der Erfindung können an einer unteren Seite des Abschlussstücks Bajonett-Zapfen ausgebildet sein, die mit angrenzend an einen oberen Randbereich des Außenrohrs ausgebildeten Bajonett-Ausnehmungen in Eingriff bringbar sind, um dadurch das Abschlussstück und das Außenrohr miteinander zu verbinden. Anders ausgedrückt, ist es mit Hilfe dieser Bajonett-Zapfen und entsprechender Ausnehmungen in dem Außenrohr an dessen oberem Ende möglich, das Außenrohr und das Abschlussstück mittels Formschluss sowohl zuverlässig miteinander zu verbinden als auch in gleicher Weise wieder voneinander lösen zu können, vorzugsweise zu Reinigungszwecken nach einem Gebrauch der erfindungsgemäßen Vorrichtung.

In vorteilhafter Weiterbildung der Erfindung kann an einem unteren Ende des Außenrohrs ein Ringelement angebracht sein, dessen Innendurchmesser an den Außendurchmesser des Außenrohrs angepasst ist. Falls ein Randbereich am unteren Ende des Außenrohrs umgebördelt ist, so kann dieses Ringelement, wenn es auf das Außenrohr vom oberen Ende her aufgebracht wird, mit einer an seiner Innenumfangsfläche ausgebildeten Fase auf dem umgebördelten Randbereich des Außenrohrs aufsitzen.

Das vorstehend genannte Ringelement dient zu dem Zweck, dass eine Verschlusskappe am unteren offenen Ende des Außenrohrs befestigt werden kann. Hierzu ist an einer Außenumfangsfläche des Ringelements ein Außengewinde ausgebildet. Komplementär hierzu ist an einer Innenumfangsfläche der Verschlusskappe, die becherförmig ausgebildet ist, ein Innengewinde ausgebildet. Somit ist es möglich, dass die Verschlusskappe auf das Ringelement, welches auf dem umgebördelten Randbereich des unteren Endes des Außenrohrs aufsitzt, auf das Ringelement aufgeschraubt wird, um damit das untere offene Ende des Außenrohrs mittels der Verschlusskappe geeignet zu verschließen.

Dank der Verwendung des Ringelements, welches wie erläutert an dem umgebördelten Randbereich des Außenrohrs an seinem unteren Ende anbringbar ist, ist es möglich, dass somit an dem Außenrohr keine weiteren Vorkehrungen, wie insbesondere das Ausbilden eines Außengewindes oder dergleichen, vorzusehen sind, um die Verschlusskappe mit bzw. an dem unteren Ende des Außenrohrs geeignet zu befestigen. In dieser Weise ist eine preiswerte und robuste Herstellbarkeit für das Außenrohr gewährleistet.

In vorteilhafter Weiterbildung der Erfindung kann zwischen der Verschlusskappe und dem unteren Ende des Abschlussrohrs, wenn darauf das Ringelement aufgebracht ist, ein scheibenförmiges Dichtelement eingesetzt sein. Seiner Bezeichnung entsprechend ist es mittels dieses Dichtelements möglich, die Dichtwirkung zwischen der Verschlusskappe und dem Randbereich am unteren Ende des Außenrohrs zu verbessern.

In vorteilhafter Weiterbildung der Erfindung kann in einem mittigen Bereich des Dichtelements an einer dem Innenrohr zugewandten Seite eine ringförmige Erhebung ausgebildet sein, deren Durchmesser an einen Innendurchmesser des Innenrohrs angepasst ist, so dass das Innenrohr, wenn es in das Außenrohr eingesetzt ist, mit seinem unteren offenen Rand auf der Erhebung aufsitzt und dadurch innerhalb des Außenrohrs zentrisch gehalten ist.

Zweckmäßigerweise ist diese ringförmige Erhebung an ihrem Außenumfang konisch ausgebildet, so dass der Außendurchmesser dieser ringförmigen Erhebung ausgehend von der Fläche des Dichtelements nach oben hin abnimmt. Somit ist es möglich, dass das Innenrohr, wenn dieses auf der Erhebung aufsitzt, sich mit seinem unteren Ende bzw. Rand in Folge der Gewichtskraft selbsttätig in Bezug auf diese Erhebung zentriert. Damit wird eine zentrische Positionierung des Innenrohrs innerhalb des Außenrohrs erreicht.

In vorteilhafter Weiterbildung der Erfindung können an einer Unterseite der Verschlusskappe eine Mehrzahl von Noppen ausgebildet sein, die von der Unterseite abragen. Zweckmäßigerweise sind diese Noppen an der Unterseite der Verschlusskappe angrenzend zu deren Außenumfang in gleichmäßigen Abständen zueinander angeordnet. Jedenfalls dienen diese Noppen zu dem Zweck, dass eine Unterseite der Verschlusskappe, wenn diese wie erläutert mit bzw. an dem unteren Ende des Außenrohrs befestigt ist, beim Aufstellen der Vorrichtung auf einem Untergrund nicht in flächigem Kontakt mit dem Untergrund ist, sondern sich, in Entsprechung der Höhe der genannten Noppen, in einem Abstand von dem Untergrund befindet. Dies ist für den Fall vorteilhaft, dass die Vorrichtung zwecks einer Erwärmung bzw. zu Garzwecken in ein Wasserbad eingebracht wird, so dass die sich bei Hitze bildenden Dampfblasen im Bereich der Unterseite der Verschlusskappe zur Seite hin entweichen können. Dies wirkt sich dann vorteilhaft auf die Standsicherheit der Vorrichtung innerhalb eines solchen Wasserbads aus.

In vorteilhafter Weiterbildung der Erfindung kann an dem Abschlussstück eine Aufnahme ausgebildet sein, in der ein Aufhängebügel anbringbar ist, mit dem die Vorrichtung im montierten Zustand aufgehängt werden kann. Beispielsweise ist es möglich, dass die Vorrichtung im montierten Zustand mit Hilfe des genannten Aufhängebügels in einem Backofen aufgehangen wird, so dass dann in der Hitze des Backofens ein Zubereiten von zu garender Masse, die in den zwischen dem Innenrohr und dem Außenrohr gebildeten Ringspalt oder in das Außenrohr eingefüllt worden ist, zu erreichen.

Wie vorstehend bereits erläutert, dient die erfindungsgemäße Vorrichtung insbesondere zur Zubereitung von sogenanntem "Stangenei". Hierbei kann die Vorrichtung wie erläutert in ein Wasserbad (mit heißem Wasser) eingebracht werden oder mit Hilfe des Aufhängebügels in einem erhitzten Back- bzw. Umluftofen aufgehangen werden. Gleichwohl ist es auch möglich, mit Hilfe der erfindungsgemäßen Vorrichtung auch andere Speisen zuzubereiten, beispielsweise Pfannkuchen in Stangenform oder dergleichen. Jedenfalls ermöglichen der Ringspalt, der sich zwischen dem Außenrohr und dem darin eingesetzten Innenrohr bildet, und das Herausziehen-Können des Innenrohrs aus dem Außenrohr, sobald eine Speise-Masse in dem Ringspalt ausreichend gegart worden ist, und der sich hierdurch frei werdende Kernbereich innerhalb des Außenrohrs eine Realisierung von vielen geschmackvollen Varianten für das Zubereiten einer stangenförmigen Speise "on demand", d.h. nach Wunsch des Bedieners.

Die erfindungsgemäße Vorrichtung eignet sich für die individuelle Herstellung von Speisen, insbesondere in Form von Ei-Rollen bzw. von "Stangenei", im Umfeld häuslicher Kücheneinrichtungen oder auch in kommerziellen Küchen der Gastronom ie

Nachstehend sind bevorzugte Ausführungsformen der Erfindung anhand einer schematisch vereinfachten Zeichnung im Detail beschrieben.

Es zeigen:
- Fig. 1: eine Seitenansicht einer erfindungsgemäßen Vorrichtung im montierten Zustand, gemäß einer ersten Ausführungsform,
- Fig. 2: eine Schnittansicht der erfindungsgemäßen Vorrichtung entlang der Linie A-A von Fig. 1,
- Fig. 3(a)-(c): jeweils Perspektivansichten der Vorrichtung von Fig. 1 aus jeweils verschiedenen Richtungen,
- Fig. 4: eine Seitenansicht eines Außenrohrs, welches Teil der Vorrichtung von Fig. 1 ist,
- Fig. 5: eine Schnittansicht des Außenrohrs entlang der Linie A-A von Fig. 4,
- Fig. 6: eine Perspektivansicht des Außenrohrs von Fig. 4,
- Fig. 7: eine Seitenansicht eines Innenrohrs, das Teil der Vorrichtung von Fig. 1 ist,
- Fig. 8: eine Perspektivansicht des Innenrohrs von Fig. 7,
- Fig. 9: eine Perspektivansicht eines Abschlussstücks von einer oberen Seite her, wobei dieses Abschlussstück Teil der Vorrichtung von Fig. 1 ist,
- Fig. 10: eine Perspektivansicht des Abschlussstücks von Fig. 9 von einer unteren Seite her,
- Fig. 11: eine Stirnseitenansicht des Abschlussstücks von Fig. 9 von einer oberen Seite her,
- Fig. 12: eine Draufsicht auf das Abschlussstück von Fig. 9,
- Fig. 13: eine Schnittansicht des Abschlussstücks entlang der Linie H-H von Fig. 12,
- Fig. 14: eine Schnittansicht des Abschlussstücks entlang der Linie A-A von Fig. 12,
- Fig. 15: eine Perspektivansicht eines Ringelements, das Teil der Vorrichtung von Fig. 1 ist,
- Fig. 16: eine Seitenansicht des Ringelements von Fig. 15,
- Fig. 17: eine Draufsicht auf eine Verschlusskappe von unten, d.h. von einer Bodenseite her gesehen,
- Fig. 18: eine Perspektivansicht der Verschlusskappe von Fig. 17,
- Fig. 19: eine Schnittansicht der Verschlusskappe entlang der Linie A-A von Fig. 17,
- Fig. 20: eine Seitenansicht eines scheibenförmigen Dichtelements, das Teil der Vorrichtung von Fig. 1 ist,
- Fig. 21: eine Perspektivansicht des Dichtelements von Fig. 20,
- Fig. 22: eine Perspektivansicht einer erfindungsgemäßen Vorrichtung gemäß einer weiteren Ausführungsform,
- Fig. 23: eine Perspektivansicht eines Aufhängebügels, der Teil der Vorrichtung von Fig. 22 ist, und
- Fig. 24: eine Seitenansicht der erfindungsgemäßen Vorrichtung von Fig. 22.

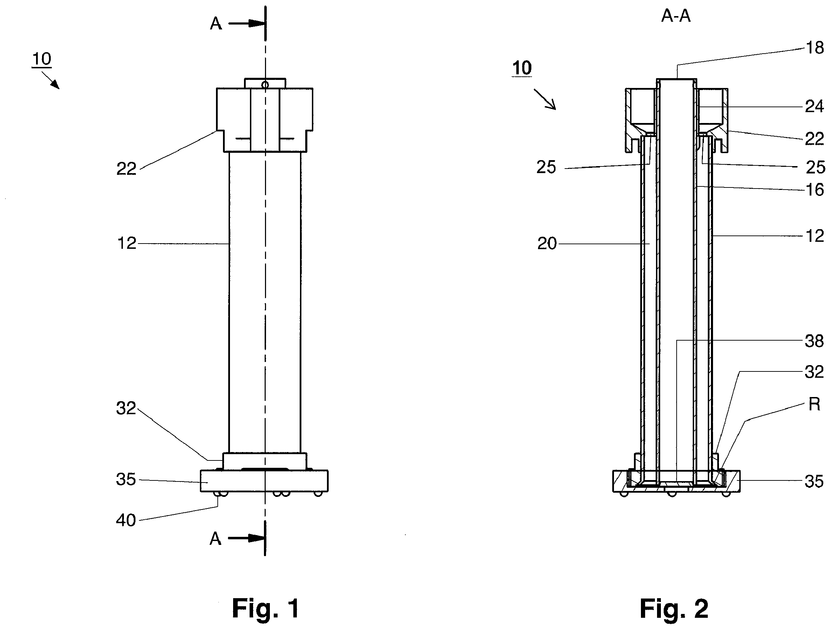

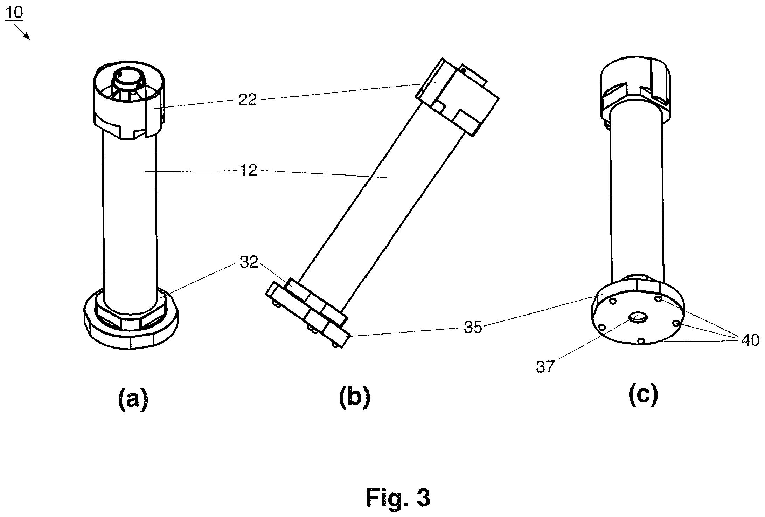

Nachstehend sind unter Bezugnahme auf die Fig. 1-24 bevorzugte Ausführungsformen einer erfindungsgemäßen Vorrichtung 10 dargestellt und erläutert, mit der eine Speise gegart werden kann. Bei einer solchen Speise kann es sich um eine zu garende Masse handeln, die Ei und/oder Ei-Teilfraktionen aufweist oder aus diesen Bestandteilen gebildet ist. Gleiche Merkmale in der Zeichnung sind jeweils mit gleichen Bezugszeichen versehen. An dieser Stelle wird gesondert darauf hingewiesen, dass die Zeichnung lediglich vereinfacht und insbesondere ohne Maßstab dargestellt ist.

Die erfindungsgemäße Vorrichtung 10 ist in Fig. 1 in einer Seitenansicht dargestellt, wobei Fig. 2 eine Schnittansicht entlang der Linie A-A von Fig. 1 zeigt. Die Vorrichtung 10 umfasst ein längliches Außenrohr 12 und des Weiteren auch ein längliches Innenrohr 16 (vgl. Fig. 2). In Anbetracht dessen, dass ein Außendurchmesser des Innenrohrs 16 kleiner gewählt ist als ein Innendurchmesser des Außenrohrs 12, ist es möglich, dass das Innenrohr 16 in Längsrichtung in das Außenrohr 12 eingesetzt werden kann, so wie es in der Fig. 2 dargestellt ist.

Falls das Innenrohr 16 in das Außenrohr 12 eingesetzt ist, bildet sich zwischen diesen beiden Rohren 12, 16 ein Ringspalt 20 (vgl. Fig. 2).

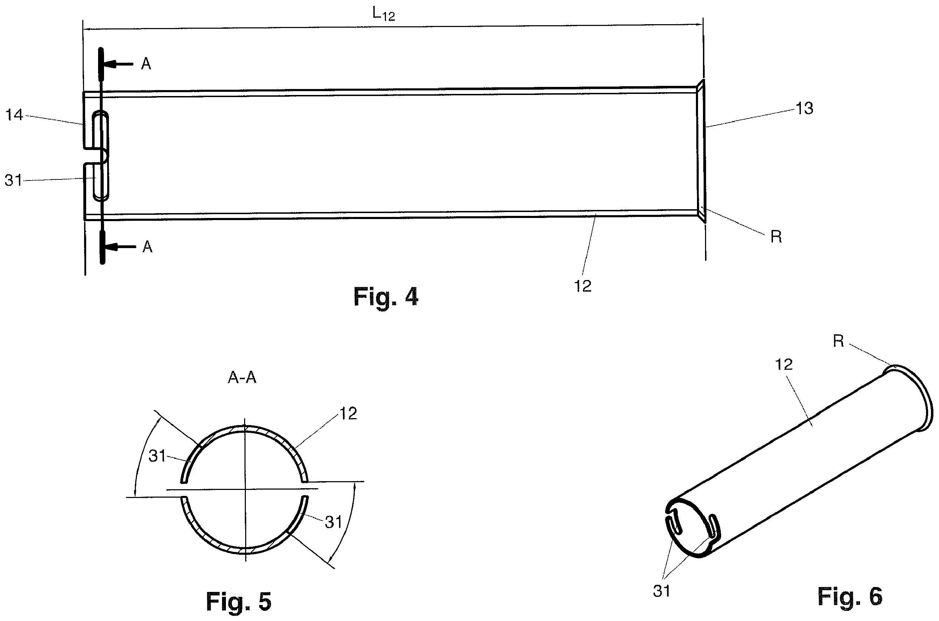

Fig. 4 zeigt das Außenrohr in einer Seitenansicht. Hierin ist zu erkennen, dass das Außenrohr 12 ein unteres Ende 13 und ein entgegengesetztes oberes Ende 14 aufweist. Angrenzend zum oberen Ende 14 sind in der Wandung des Außenrohrs 12 Bajonett-Ausnehmungen 31 ausgebildet, die in der Schnittansicht von Fig. 5 ebenfalls gezeigt sind.

Fig. 6 zeigt das Außenrohr 12 in einer Perspektivansicht. Hierin ist zu erkennen, dass am unteren Ende 13 des Außenrohrs 12 ein umgebördelter Randbereich R ausgebildet ist.

Das Außenrohr 12 ist wie bereits erläutert länglich ausgebildet und weist somit eine Länge auf, die in der Fig. 4 mit "L₁₂" bezeichnet ist.

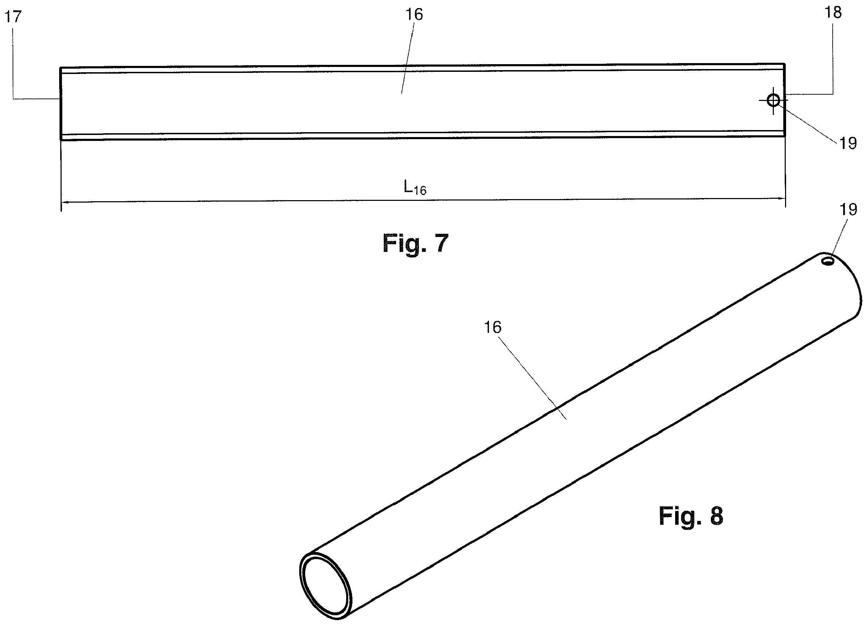

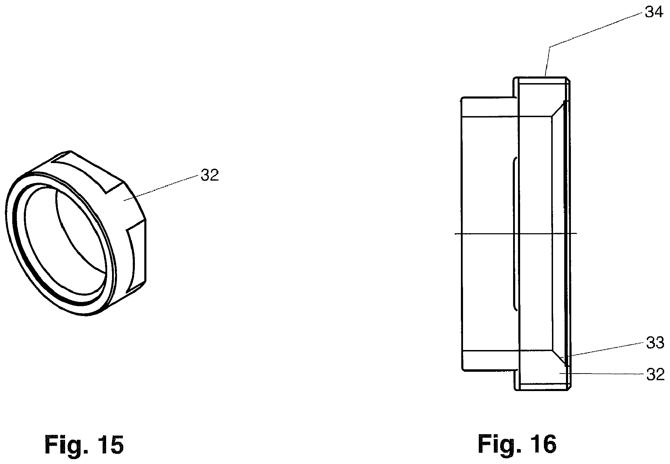

Fig. 7 zeigt das Innenrohr 16 in einer Seitenansicht. Hierin ist erkennbar, dass das Innenrohr 16 ein unteres Ende 17 und ein oberes Ende 18 hat. Fig. 8 zeigt das Innenrohr von Fig. 16 nochmals und zum besseren Verständnis in einer Perspektivansicht.

Angrenzend an das obere Ende 18 sind in der Wandung des Innenrohrs 16 Bohrungen 19 ausgebildet. Die Funktion dieser Bohrungen 19 wird nachstehend noch gesondert erläutert.

Wie vorstehend bereits erläutert, hat das Innenrohr 16 eine längliche Erstreckung. Die entsprechende Länge des Innenrohrs 16 ist in der Fig. 7 mit "L₁₆" bezeichnet.

Die Vorrichtung 10 umfasst des Weiteren ein Abschlussstück 22 (vgl. Fig. 1).

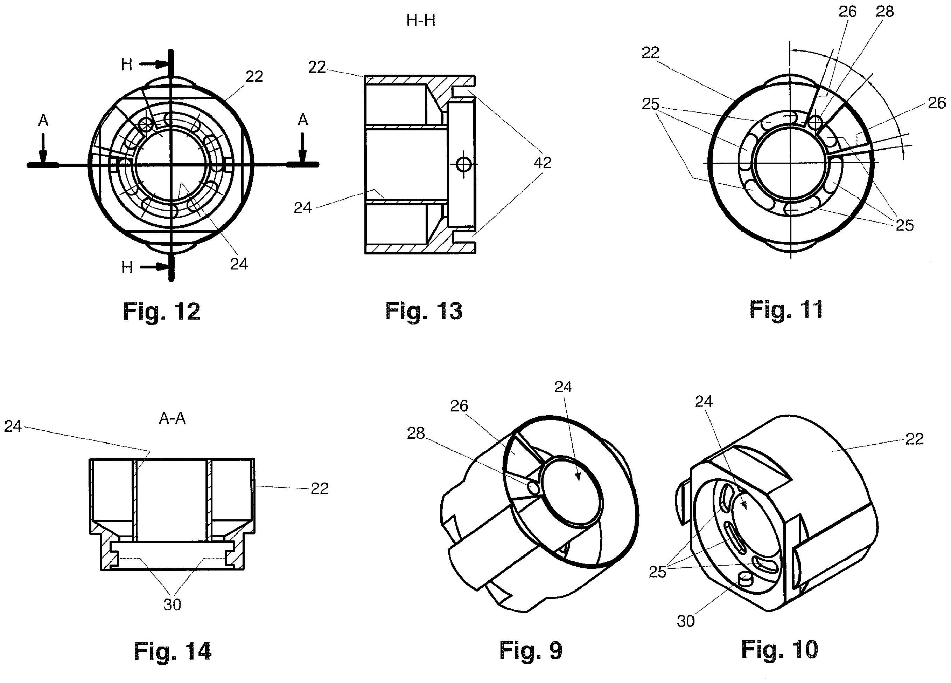

Mit Hilfe von Bajonett-Zapfen 30 (vgl. Fig. 10, Fig. 14), die an einer unteren Seite des Abschlussstücks 22 ausgebildet sind, lässt sich das Abschlussstück 22 formschlüssig mit den Bajonett-Ausnehmungen 31, die an dem oberen Ende 14 des Außenrohrs 12 ausgebildet sind, befestigen.

Im bestimmungsgemäßen Gebrauch der Vorrichtung 10 ist das Abschlussstück 22 am oberen Ende 14 des Außenrohrs 12 befestigt.

Im Anschluss an einen Gebrauch der Vorrichtung 10 kann das Abschlussstück 22 dank der genannten Bajonett-Konstruktion von dem oberen Ende 14 des Außenrohrs 12 entriegelt und davon abgenommen werden. Dies ist insbesondere zu Reinigungszwecken von Vorteil.

Ein Vergleich von Fig. 4 mit Fig. 7 verdeutlicht, dass das Innenrohr 16 eine größere Länge aufweist als das Außenrohr 12. Dies entspricht der Beziehung: L₁₆ > L₁₂.

Nachstehend sind unter Bezugnahme auf die Fig. 9-14 weitere Merkmale des Abschlussstücks 22 gezeigt und wie folgt erläutert:
Das Abschlussstück 22 weist an seiner oberen Stirnseite eine zentrische Führungsöffnung 24 auf.

Angrenzend zu dieser Führungsöffnung 24 sind in dem Abschlussstück 22 eine Mehrzahl von Durchlassöffnungen 25 (vgl. Fig. 2, Fig. 10, Fig. 11) ausgebildet.

Im montierten Zustand der Vorrichtung 10, d.h. wenn das Abschlussstück 22 mittels der genannten Bajonett-Konstruktion am oberen Ende 14 des Außenrohrs 12 befestigt ist, kann das Innenrohr 16 mit seinem unteren Ende 17 in die zentrische Führungsöffnung 24 eingebracht werden. In dieser Weise ist es möglich, das Innenrohr 16 in Längsrichtung in das Außenrohr 12 einzusetzen. Hierbei sitzt dann das untere Ende 17 des Innenrohrs 16 auf einer Verschlusskappe 35 auf, die wie nachstehend noch erläutert, am unteren Ende 13 des Außenrohrs 12 angebracht werden kann.

In Anbetracht dessen, dass eine Länge des Innenrohrs 16 größer ist als jene des Außenrohrs 12 (d.h.: L₁₆ > L₁₂), ragt das Innenrohr 16, wenn es in das Außenrohr 12 eingesetzt ist, mit seinem oberen Ende 18 aus dem Außenrohr 12 und auch aus der zentrischen Führungsöffnung 24 heraus. Dies ist beispielsweise in Fig. 2 veranschaulicht.

Wenn das Abschlussstück 22 auf das obere Ende 14 des Außenrohrs 12 aufgesetzt ist, fluchten die Durchlassöffnungen 25, die wie erläutert in dem Abschlussstück 22 ausgebildet sind, mit dem zwischen dem Außenrohr 12 und dem Innenrohr 16 gebildeten Ringspalt 20.

Fig. 11 verdeutlicht, dass in einem inneren Bereich des Abschlussstücks 22 senkrechte Schottwände 26 vorgesehen sind. Zwischen diesen Schottwänden 26 befindet sich zumindest eine Durchlassöffnung 25. Die Schottwände 26 haben die Funktion, dass die zwischen ihnen befindliche Durchlassöffnung 25 fluidtechnisch von den übrigen Durchlassöffnungen 25 abgegrenzt ist, so dass diese Durchlassöffnung 25 die Funktion einer Lüftungsöffnung erfüllt, wenn der Ringspalt 20 durch die übrigen Durchlassöffnungen 25 mit einer zu garenden Masse befüllt wird.

Fig. 11 verdeutlicht des Weiteren, dass in einer Stirnseite des Abschlussstücks 22 eine Aufnahmeöffnung 28 ausgebildet ist. Im montierten Zustand des Abschlussstücks 22 (vgl. Fig. 2) fluchtet diese Aufnahmeöffnung 28 mit dem Ringspalt 20. Entsprechend ist es möglich, ein (nicht gezeigtes) Thermometer oder einen (nicht gezeigten) Schwimmer, beide jeweils insbesondere stabförmig ausgebildet, durch die Aufnahmeöffnung 28 hindurch in den Ringspalt 20 einzubringen, um somit eine Information bezüglich Temperatur bzw. Füllstand einer zu garenden Speise bzw. Masse zu erhalten, die in den Ringspalt 20 eingefüllt worden ist.

Nachstehend ist unter Bezugnahme auf die Fig. 15-21 erläutert, in welcher Weise das untere Ende 13 des Außenrohrs 12 mittels der Verschlusskappe 35 verschlossen werden kann.

Die erfindungsgemäße Vorrichtung 10 umfasst ein Ringelement 32, von dem in Fig. 15 eine Perspektivansicht gezeigt ist. In Bezug auf dieses Ringelement 32 ist hervorzuheben, dass dessen Innendurchmesser an den Außendurchmesser des Außenrohrs 12 angepasst ist. Somit ist es möglich, das Ringelement 32 vom oberen Ende 14 her auf das Außenrohr 12 aufzuschieben bzw. aufzufädeln.

Fig. 16 verdeutlicht, dass angrenzend zu einer Stirnseite des Ringelements 32 eine Fase 33 ausgebildet ist, wobei angrenzend hierzu an einer Außenumfangsfläche des Ringelements 32 ein Außengewinde 34 ausgebildet ist.

Wenn das Ringelement 32 auf das Außenrohr 12 aufgeschoben wird, rutscht das Ringelement 32 in Richtung des unteren Endes 13 des Außenrohrs 12, bis seine Fase 33 auf dem umgebördelten Randbereich R am unteren Ende 13 des des Außenrohrs 12 aufsitzt.

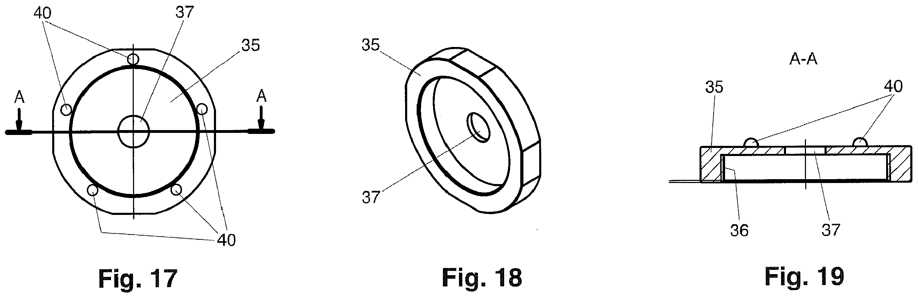

Die vorstehend bereits genannte Verschlusskappe 35 ist in den Fig. 17-19 gezeigt.

Fig. 17 zeigt die Verschlusskappe 35 in einer Ansicht von unten. Hierin ist erkennbar, dass eine Mehrzahl von Noppen 40 an der Unterseite der Verschlusskappe 35 ausgebildet sind. Die Fig. 19, welche eine Schnittansicht von Fig. 17 zeigt, verdeutlicht, dass die Noppen 40 jeweils von der Unterseite der Verschlusskappe 35 abragen. Die Funktion dieser Noppen 40 wird nachstehend noch gesondert erläutert.

Die Verschlusskappe 35 ist becherförmig ausgebildet, in Entsprechung der Darstellungen von Fig. 18 und Fig. 19. An einer Innenumfangsfläche der Verschlusskappe 35 ist ein Innengewinde 36 ausgebildet.

Ein zentrischer Bereich der Verschlusskappe 35 ist von einer Ausnehmung 37 durchsetzt. Diese Ausnehmung ist in den Fig. 17-19 jeweils durch das Bezugszeichen "37" angezogen.

Im Zuge einer Montage der erfindungsgemäßen Vorrichtung 10 wird als erstes, d.h. noch vor einem Aufsetzen des Abschlussstücks 22, das Ringelement 32 von dem oberen Ende 14 her auf das Außenrohr 20 aufgefädelt. In Folge dessen rutscht dann das Ringelement 32 bis zum unteren Ende 13 des Außenrohrs 12, wobei dann die Fase 33 des Ringelements 32 auf dem umgebördelten Randbereich R, der wie erläutert am unteren Ende 13 des Außenrohrs 12 ausgebildet ist, aufsitzt. Sodann kann die Verschlusskappe 35 mit ihrem Innengewinde 36 auf das Außengewinde 34 des Ringelements 32 aufgeschraubt werden.

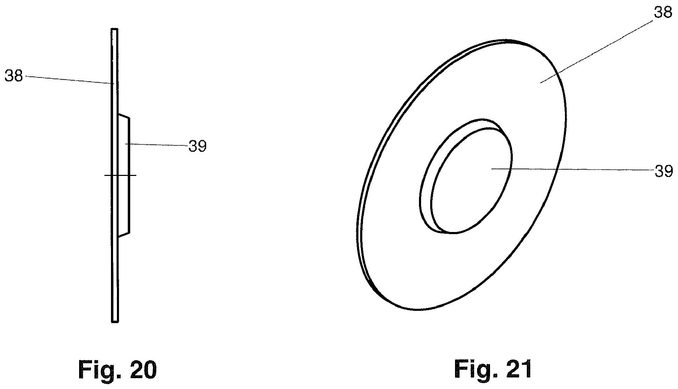

Zur Verbesserung einer Dichtwirkung zwischen dem unteren offenen Ende 13 des Außenrohrs 12 und der daran verschraubten Verschlusskappe 35 kann dazwischen ein scheibenförmiges Dichtelement 38 eingesetzt sein, das in Fig. 20 bzw. Fig. 21 jeweils in einer Seitenansicht bzw. Perspektivansicht gezeigt ist.

Im Anschluss an ein Verschrauben der Verschlusskappe 35 an bzw. mit dem unteren Ende 13 des Außenrohrs 12 wird dann das Abschlussstück 22 am oberen Ende 14 des Außenrohrs 12 montiert, wobei das Innenrohr 16 durch die zentrische Führungsöffnung 24 eingebracht und in dieser Weise in das Außenrohr 12 eingesetzt wird (vgl. Fig. 2).

Der montierte Zustand des scheibenförmigen Dichtelements 38, d.h. wenn es zwischen dem unteren Ende 13 des Außenrohrs 12 und der Verschlusskappe 35 eingesetzt ist, ist in der Darstellung von Fig. 2 gezeigt.

In einem mittigen Bereich des Dichtelements 38 ist an einer dem Innenrohr 16 zugewandten Seite eine ringförmige Erhebung 39 ausgebildet. Hierbei ist ein Durchmesser dieser Erhebung 39 an einen Innendurchmesser des Innenrohrs 16 angepasst.

Zweckmäßigerweise ist die ringförmige Erhebung 39 an ihrem Außenumfang konisch ausgebildet. Dies ist in der Perspektivansicht von Fig. 21 erkennbar.

Wenn das Innenrohr 16 wie erläutert in das Außenrohr 12 eingesetzt ist (vgl. Fig. 2), sitzt das Innenrohr 16 mit seinem unteren Ende 17 in Folge seiner Gewichtskraft, und ggf. auch durch Ausüben einer nach unten gerichteten Druckkraft, auf der ringförmigen Erhebung 39 auf. Hierbei greift die konische Ausgestaltung der Erhebung 39 in den Innenrand des Innenrohrs 16 an seinem unteren Ende 17 ein. Die Wechselwirkung zwischen der konischen Erhebung 39 und dem unteren Ende 17 des Innenrohrs 16 hat zur Folge, dass das Innenrohr 16 an seinem unteren Ende 17 mittig zentriert in dem Außenrohr 12 gehalten bzw. positioniert ist. Gleiches gilt für das obere Ende 18 des Innenrohrs 16, wo es wie erläutert von der zentrischen Führungsöffnung 24 umschlossen wird. Im Ergebnis wird somit das Innenrohr 16 entlang seiner gesamten Längserstreckung gleichmäßig zentriert innerhalb des Außenrohrs 12 gehalten. Hierdurch ergibt sich für den Ringspalt 20, der sich zwischen dem Außenrohr 12 und dem Innenrohr 16 bildet, entlang einer Längserstreckung der beiden Rohre 12, 16 ein gewünschter gleichmäßiger Wert.

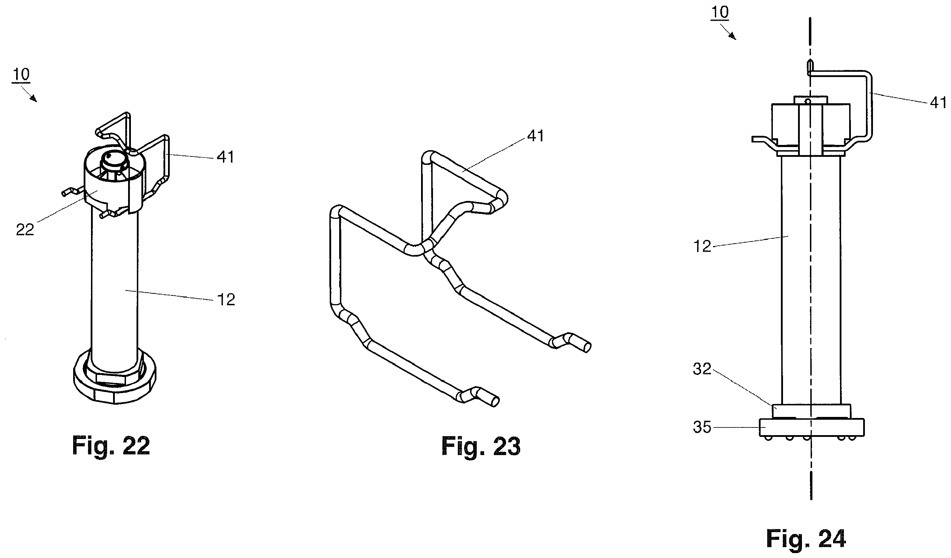

In den Fig. 22-24 ist eine weitere Ausführungsform der erfindungsgemäßen Vorrichtung 10 gezeigt und erläutert.

Fig. 22 zeigt die Vorrichtung 10 in einem montierten Zustand, wenn an dem Abschlussstück 22 ein Aufhängebügel 41 angebracht ist.

Ausweislich der Querschnittsansicht von Fig. 13 ist an dem Abschlussstück 22 an seiner dem Außenrohr 12 zugewandten Stirnseite eine Aufnahme 42 ausgebildet.

Fig. 23 zeigt den Aufhängebügel 41 in einer Perspektivansicht.

Eine Zusammenschau von Fig. 23 und Fig. 13 verdeutlicht, dass der Aufhängebügel 41 mit seinen beiden freien Enden in die Aufnahme 42 eingeführt bzw. eingesteckt werden kann, bis ein montierter Zustand für den Aufhängebügel 41 gemäß der Darstellung von Fig. 22 bzw. Fig. 24 erreicht ist.

Mittels des Aufhängebügels 41 ist es möglich, die Vorrichtung 10 im montierten Zustand (mit oder ohne Innenrohr 16) beispielsweise in einem Backofen aufzuhängen, um damit eine zu garende Masse, die in die Vorrichtung 10 eingefügt worden ist, geeignet zuzubereiten bzw. zu garen.

An dieser Stelle wird nochmals auf die vorstehend bereits genannten Noppen 40 hingewiesen, die an einer Unterseite der Verschlusskappe 35 ausgebildet sind (vgl. Fig. 17, Fig. 19). Falls die Vorrichtung 10 zu Garzwecken in ein erhitztes Wasserbad gesetzt wird, dienen die Noppen 40 zu dem Zweck, dass die Unterseite der Verschlusskappe 35 nicht flächig mit einem Boden eines Topfes oder dergleichen in Berührung gelangt, sondern stattdessen hiervon um einen Abstand entfernt angeordnet wird, welcher einer Höhe der Noppen 40, mit der sie von der Unterseite der Verschlusskappe 35 abragen, entspricht. Somit können Dampfblasen, die sich üblicherweise in einem erhitzten Wasserbad bilden, im Bereich der Unterseite der Verschlusskappe 35 seitlich entweichen. Dies verbessert die Standfestigkeit der erfindungsgemäßen Vorrichtung 10, wenn das Außenrohr 12 mit der daran befestigten Verschlusskappe 35 in ein Wasserbad eingesetzt wird.

Die Erfindung funktioniert nun wie folgt:
Ausgehend von einem demontierten Zustand der Vorrichtung 10 wird zunächst wie erläutert die Verschlusskappe 35 unter Verwendung des Ringelements 32 an dem unteren Ende 13 mit dem Außenrohr 12 verschraubt. Hierbei ist durch die Verwendung des Dichtelements 38, welches zwischen dem unteren Rand 13 des Außenrohrs 12 und der Verschlusskappe 35 eingesetzt wird, eine gute Abdichtung des Außenrohrs 12 an seinem unteren Ende 13 gegenüber der Umgebung gewährleistet.

Als Nächstes wird das Abschlussstück 22 auf das obere Ende 14 des Außenrohrs 12 aufgesetzt und mittels des Bajonett-Mechanismus 30, 31 mit dem Außenrohr 12 formschlüssig verbunden.

Sodann kann das Innenrohr 16 mit seinem unteren Ende 17 durch die zentrische Führungsöffnung 24 des Abschlussstücks 22 hindurchgeführt und somit in das Außenrohr 12 eingebracht werden. Wie erläutert, sitzt im montierten Zustand der Vorrichtung 10 das Innenrohr 16 mit seinem unteren Ende 17 auf der ringförmigen Erhebung 39, die an dem Dichtelement 38 ausgebildet ist, auf. In Folge dessen ist das Innenrohr 16 präzise zentrisch innerhalb des Außenrohrs 12 aufgenommen bzw. gehalten, wodurch auch der Ringspalt 20 zwischen den beiden Rohren 12, 16 einen konstanten Wert annimmt.

Im Anschluss an die vorstehend genannten Montageschritte ist die erfindungsgemäße Vorrichtung 10 "betriebsbereit".

Zur Zubereitung einer Speise, beispielsweise eines "Stangeneies", wird zunächst garfähiges Eiweiß durch die Durchlassöffnungen 25, die nicht unmittelbar zwischen den Schottwänden 26 angeordnet sind (vgl. Fig. 11), in den Ringspalt 20 eingefüllt. Ein geeigneter Füllstand der Eiweiß-Masse kann mittels eines (nicht gezeigten) Schwimmers überprüft werden, der durch die Aufnahmeöffnung 28 in den Ringspalt 20 eingebracht ist.

Wie vorstehend an anderer Stelle bereits erläutert, wird das Befüllen des Ringspalts 20 mit der Eiweiß-Masse homogen und insbesondere ohne unerwünschte Lufteinschlüsse realisiert. Dies wird mittels der Durchlassöffnung 25 erreicht, die unmittelbar zwischen den Schottwänden 26 angeordnet ist und dabei die Funktion einer Entlüftungsöffnung erfüllt, aus der Luft, die sich in dem Ringspalt 20 befindet und durch die darin eingefüllte Eiweiß-Masse verdrängt wird, nach oben heraus aus dem Ringspalt 20 und an die Umgebung entweichen kann.

Falls nun wie erläutert der Ringspalt 20 bestimmungsgemäß mit der EiweißMasse befüllt worden ist, wird die Vorrichtung 10 geeignet von außen erwärmt. Dies kann dadurch erfolgen, dass die Vorrichtung 10 von oben her in ein erhitztes Wasserbad eingebracht wird. Alternativ hierzu ist es auch möglich, die Vorrichtung 10 gemäß der Ausführungsform der Fig. 22-24 in einem Back- bzw. Umluftofen aufzuhängen.

Nachdem die in dem Ringspalt 20 befindliche Eiweiß-Masse ausreichend gegart worden ist und somit gestockt hat bzw. fest geworden ist, kann das Innenrohr 16 aus dem Außenrohr 12 nach oben herausgezogen werden. Dies kann mittels einer (nicht gezeigten) Stange oder dergleichen erfolgen, die in die Bohrungen 19 eingeführt wird, die an einem oberen Ende 18 des Innenrohrs 16 (vgl. Fig. 7) ausgebildet sind.

Zur Vorbereitung des vorstehend genannten Herausziehens des Innenrohrs 16 heraus aus dem Außenrohr 12 kann die Vorrichtung 10 kurzzeitig aus dem Wasserbad bzw. aus einem Backofen entfernt werden. Hierbei kann auch der Aufhängebügel 41 zu Hilfe genommen werden, der wie erläutert in die Aufnahme 42 des Abschlussstücks 22 eingesteckt ist.

Falls der Aufhängebügel 41 aus Kunststoff hergestellt ist oder zumindest an der Außenumfangsfläche des zugehörigen Stabelements mit einer Kunststoffbeschichtung versehen ist, wird hierdurch vorteilhaft erreicht, dass sich der Aufhängebügel 41 beim Erwärmen des Vorrichtung 10 nicht übermäßig stark erwärmt. Somit kann der Aufhängebügel 41 von einer Bedienperson ggf. auch ohne Topflappen bzw. Handschuh ergriffen werden, ohne dass dabei eine Gefahr von Verbrennungen an einer Hand der Bedienperson besteht.

Des Weiteren wird im Zusammenhang mit dem vorstehend genannten Herausziehen des Innenrohrs 16 aus dem Außenrohr 12 darauf hingewiesen, dass eine Außenfläche des Innenrohrs 16 mit Teflon beschichtet sein kann. Hierbei versteht sich, dass diese Teflonbeschichtung lebensmittelechte Eigenschaften aufweist. Jedenfalls wird durch diese Teflonbeschichtung ein Herausziehen des Innenrohrs 16 durch die zentrische Führungsöffnung 24 in Richtung nach oben und somit ein Entfernen des Innenrohrs 16 aus dem Außenrohr 12 erleichtert.

Gemäß einer vorteilhaften Weiterbildung der Erfindung kann für das Innenohr 16 auch vorgesehen sein, dass dieses vollständig aus Teflon oder einem vergleichbaren Kunststoff mit guten Gleiteigenschaften bzw. niedrigem Reibwert hergestellt ist. In dieser Weise ist gewährleistet, dass ein Herausziehen des Innenrohrs 16 aus dem Außenrohr 12 und durch die zentrische Führungsöffnung 24 des Abschlussstücks 22 hindurch in einfacher Weise und ohne ein Verklemmen möglich ist.

Nachdem also das Innenrohr 16 wie erläutert aus dem Außenrohr 12 entnommen bzw. entfernt worden ist, verbleibt im Zentrum der gestockten Eiweiß-Masse ein Hohlraum. Sodann ist zur Herstellung von Stangenei vorgesehen, dass in diesen Hohlraum hinein von oben her, d.h. aus Richtung des oberen Endes 14 des Außenrohrs 12 und durch die Führungsöffnung 24 des Abschlussstücks 22 hindurch eine Eigelb-Masse eingefüllt wird. Im Anschluss daran wird dann die Vorrichtung 10 erneut gezielt erwärmt, beispielsweise in einem Wasserbad oder in einem Back- bzw. Umluftofen.

Falls die beiden Ei-Fraktionen innerhalb des Außenrohrs 12 ausreichend gegart worden sind, ist der Garprozess, bei dem die Vorrichtung 10 wie erläutert von außen erwärmt wird, beendet.

Das Entnehmen der zylinderförmigen gegarten Ei-Masse aus dem Außenrohr 12 wird dadurch vorbereitet, dass zunächst die Verschlusskappe 35 von dem Ringelement 32 abgeschraubt und dann von dem unteren Ende 13 des Außenrohrs 12 demontiert wird. Somit ist dann das untere Ende 13 des Außenrohrs 12 wieder offen.

Nachdem die Verschlusskappe 35 von dem Außenrohr 12 abgeschraubt worden ist, dient die vorstehend genannte Ausnehmung 37, die in der Verschlusskappe 35 ausgebildet ist, zu dem Zweck, dass ein Hilfsgegenstand oder dergleichen durch diese Ausnehmung 37 gestoßen werden kann, so dass damit das scheibenförmige Dichtelement 38, welches sich an der entgegengesetzten Seite der Verschlusskappe 35 innerhalb der becherförmigen Vertiefung befindet, von der Verschlusskappe 35 gelöst bzw. entfernt wird.

In einem weiteren Schritt zur Vorbereitung der Entnahme der fertig gegarten Speise heraus aus dem Außenrohr 12 wird dann das Abschlussstück 22 von dem oberen Ende 14 des Außenrohrs 12 demontiert. Dies ist in einfacher Weise durch Lösen des Bajonett-Verschlusses möglich.

Nachdem nun das Außenrohr 12 nach dem Abschrauben bzw. Entfernen der Verschlusskappe 35 und einer Demontage des Abschlussstücks 22 an seinen beiden Enden 13, 14 wieder offen ist, kann die fertig gegarte Speise aus dem Außenrohr 12 herausgeschoben werden. Hierzu kann als Hilfsmittel beispielsweise das Innenrohr 16 mit einer an einem Ende davon angebrachten (nicht gezeigten) Platte dienen, wobei ein Durchmesser dieser Platte an einen Innendurchmesser des Außenrohrs 12 angepasst ist. Anders ausgedrückt, dient ein solcherart modifiziertes Innenrohr 16, an dem die besagte Platte an einem Ende davon beispielsweise mit einer Klemmverbindung oder dergleichen angebracht ist, als "Ausschubkolben", mit dem die fertig gegarte Speise aus dem Außenrohr 12 herausgeschoben werden kann.

Das vorstehend genannte Herausschieben der fertig gegarten Speise aus dem Außenrohr 12 kann dadurch gefördert werden, dass eine Innenumfangsfläche des Außenrohrs 12 mit einer Beschichtung mit niedrigem Reibwert versehen ist, beispielsweise mit einer lebensmittelechten Teflon-Beschichtung. Mit einer solchen Beschichtung ist gewährleistet, dass ein Reibwert der fertig gegarten Speise mit der Innenumfangsfläche des Außenrohrs 12 vermindert ist und insoweit das erläuterte Herausschieben der fertig gegarten Speise leichter bzw. mit noch weniger Widerstand möglich ist.

Schließlich wird darauf hingewiesen, dass die erfindungsgemäße Vorrichtung 10 sich dadurch auszeichnet, dass alle der vorstehend genannten zugehörigen Bauteile, nämlich
- Außenrohr 12,
- Innenohr 16,
- Abschlussstück 22,
- Ringelement 32,
- Verschlusskappe 35,
- scheibenförmiges Dichtelement 38,
- Aufhängebügel 41,
frei von Werkzeugen entweder miteinander verbunden oder voneinander demontiert werden können. Dies ist insbesondere für Reinigungszwecke der Vorrichtung 10 von Vorteil.

### Bezugszeichenliste

- 10: Vorrichtung
- 12: Außenrohr
- 13/14: unteres/oberes Ende (des Außenrohrs 12)
- 16: Innenrohr
- 17/18: unteres/oberes Ende (des Innenrohrs 16)
- 19: Bohrungen (am oberen Ende 18 des Innenrohrs 16)
- 20: Ringspalt
- 22: Abschlussstück
- 24: zentrische Führungsöffnung
- 25: Durchlassöffnung
- 26: Schottwand
- 28: Aufnahmeöffnung
- 30: Bajonett-Zapfen
- 31: Bajonett-Ausnehmung
- 32: Ringelement
- 33: Fase
- 34: Außengewinde (an Außenumfangsfläche des Ringelements 32)
- 35: Verschlusskappe
- 36: Innengewinde (an Innenumfangsfläche der Verschlusskappe 35)
- 37: Ausnehmung (im zentrischen Bereich der Verschlusskappe 35)
- 38: scheibenförmiges Dichtelement
- 39: ringförmige Erhebung
- 40: Noppen
- 41: Aufhängebügel
- 42: Aufnahme
- D₁₂: Außendurchmesser (des Außenrohrs 12)
- D₁₆: Außendurchmesser (des Innenrohrs 16)
- L₁₂: Länge (des Außenrohrs 12)
- L₁₆: Länge (des Innenrohrs 16)
- R: umgebördelter Randbereich (am unteren Ende 13 des Außenrohrs 12)

## Patentansprüche

1. Vorrichtung (10) zum Garen einer Speise, insbesondere einer zu garenden Masse, die Ei und/oder Ei-Teilfraktionen aufweist oder aus diesen Bestandteilen gebildet ist, umfassend
ein längliches Außenrohr (12), das an seinem unteren Ende (13) verschließbar ist,
ein längliches Innenrohr (16), dessen Außendurchmesser kleiner ist als der Innendurchmesser des Außenrohrs (12), so dass das Innenrohr (16) in Längsrichtung in das Außenrohr (12) einsetzbar ist und sich dabei zwischen dem Innenrohr (16) und dem Außenrohr (12) ein Ringspalt (20) bildet, und
ein Abschlussstück (22), das auf ein offenes oberes Ende (14) des Außenrohrs (12) aufsetzbar und daran befestigbar ist, wobei in einer Stirnseite des Abschlussstücks (22) zumindest eine Durchlassöffnung (25) ausgebildet ist, die mit dem zwischen dem Innenrohr (16) und dem Außenrohr (12) gebildeten Ringspalt (20) fluchtet, derart, dass der Ringspalt (20), wenn das Abschlussstück (22) auf das obere Ende (14) des Außenrohrs (12) aufgesetzt ist, von außen durch die Durchlassöffnung (25) befüllbar ist.
**dadurch gekennzeichnet,**
**dass** das Abschlussstück (22) an seiner oberen Seite becherförmig und somit offen ausgebildet ist, wobei in einem inneren Bereich des Abschlussstücks (22) senkrechte Schottwände (26) vorgesehen sind, und
**dass** in der Stirnseite des Abschlussstücks (22) eine Mehrzahl von Durchlassöffnungen (25) ausgebildet sind, die mit dem zwischen dem Innenrohr (16) und dem Außenrohr (12) gebildeten Ringspalt (20) fluchten, wobei zumindest eine Durchlassöffnung (25) durch die Schottwände (26) fluidtechnisch von den übrigen Durchlassöffnungen (25) abgegrenzt ist, so dass diese Durchlassöffnung (25) die Funktion einer Lüftungsöffnung erfüllt, wenn der Ringspalt (20) durch die übrigen Durchlassöffnungen (25) mit einer zu garenden Masse befüllt wird.

2. Vorrichtung (10) nach Anspruch 1, **dadurch gekennzeichnet, dass** das Innenrohr (16), wenn das Abschlussstück (22) auf das obere Ende (14) des Außenrohrs (12) aufgesetzt ist, durch das Abschlussstück (22) zentrisch innerhalb des Außenrohrs (12) gehalten ist.

3. Vorrichtung (10) nach Anspruch 2, **dadurch gekennzeichnet, dass** das Abschlussstück (22) in seiner Stirnseite eine zentrische Führungsöffnung (24) aufweist, deren Innendurchmesser an den Außendurchmesser des Innenrohrs (16) angepasst ist, wobei das Innenrohr (16) eine größere Länge als das Außenrohr (12) hat und das Innenrohr (16), wenn es in das Außenrohr (12) eingesetzt ist, aus dem Außenrohr (12) nach oben herausragt und dabei von der zentrischen Führungsöffnung (24) eingefasst ist.

4. Vorrichtung (10) nach Anspruch 3, **dadurch gekennzeichnet, dass** das Innenrohr (16), wenn es zentrisch innerhalb des Außenrohrs (12) gehalten ist, durch die zentrische Führungsöffnung (24) des Abschlussstücks (22) nach oben aus dem Außenrohr (12) herausnehmbar ist.

5. Vorrichtung (10) nach einem der vorhergehenden Ansprüche, **dadurch gekennzeichnet, dass** in der Stirnseite des Abschlussstücks (22) zumindest eine Aufnahmeöffnung (28) ausgebildet ist, in der ein Thermoelement oder ein Schwimmer einbringbar ist und dadurch in den zwischen dem Innenrohr (16) und dem Außenrohr (12) gebildeten Ringspalt (20) hineinragt.

6. Vorrichtung (10) nach einem der vorhergehenden Ansprüche, **dadurch gekennzeichnet, dass** an einer unteren Seite des Abschlussstücks (22) Bajonett-Zapfen (30) ausgebildet sind, die mit angrenzend an einen oberen Randbereich des Außenrohrs (12) ausgebildeten Bajonett-Ausnehmungen (31) in Eingriff bringbar sind, um dadurch das Abschlussstück (22) und das Außenrohr (12) miteinander zu verbinden.

7. Vorrichtung (10) nach einem der vorhergehenden Ansprüche, **dadurch gekennzeichnet, dass** an einem unteren Ende (13) des Außenrohrs (12) ein Ringelement (32) anbringbar ist, dessen Innendurchmesser an den Außendurchmesser des Außenrohrs (12) angepasst ist.

8. Vorrichtung (10) nach Anspruch 7, **dadurch gekennzeichnet, dass** ein Randbereich (R) am unteren Ende (13) des Außenrohrs (12) umgebördelt ist, so dass das Ringelement (32), wenn es auf das Außenrohr (12) vom oberen Ende (14) her aufgebracht wird, mit einer an seiner Innenumfangsfläche ausgebildeten Fase (33) auf dem umgebördelten Randbereich (R) des Außenrohrs (12) aufsitzt.

9. Vorrichtung (10) nach Anspruch 7 oder 8, **dadurch gekennzeichnet, dass** das untere offene Ende (13) des Außenrohrs (12) durch eine Verschlusskappe (35) verschließbar ist, wobei die Verschlusskappe (35) becherförmig ausgebildet ist und an ihrer Innenumfangsfläche ein Innengewinde (36) aufweist, das mit einem Außengewinde (34), welches an einer Außenumfangsfläche des Ringelements (32) ausgebildet ist, verschraubbar ist.

10. Vorrichtung (10) nach Anspruch 9, **dadurch gekennzeichnet, dass** zwischen der Verschlusskappe (35) und dem unteren Ende (13) des Außenrohrs (12), wenn darauf das Ringelement (32) aufgebracht ist, ein scheibenförmiges Dichtelement (38) eingesetzt ist.

11. Vorrichtung (10) nach Anspruch 10, **dadurch gekennzeichnet, dass** in einem mittigen Bereich des Dichtelements (38) an einer dem Innenrohr (16) zugewandten Seite eine ringförmige Erhebung (39) ausgebildet ist, deren Durchmesser an einen Innendurchmesser des Innenrohrs (16) angepasst ist, so dass das Innenrohr (16), wenn es in das Außenrohr (12) eingesetzt ist, mit seinem unteren Ende (17) auf der Erhebung (39) aufsitzt und dadurch innerhalb des Außenrohrs (12) zentrisch gehalten ist, vorzugsweise, dass die ringförmige Erhebung (39) an ihrem Außenumfang konisch ausgebildet ist, so dass der Außendurchmesser dieser ringförmigen Erhebung (39) ausgehend von der Fläche des Dichtelements (38) nach oben hin abnimmt.

12. Vorrichtung (10) nach einem der Ansprüche 9 bis 11, **dadurch gekennzeichnet, dass** an einer Unterseite der Verschlusskappe (35) eine Mehrzahl von Noppen (40) ausgebildet sind, die von der Unterseite abragen, vorzugsweise, dass die Noppen (40) an der Unterseite der Verschlusskappe (35) angrenzend zu deren Außenumfang in gleichmäßigen Abständen zueinander angeordnet sind.

13. Vorrichtung (10) nach einem der Ansprüche 9 bis 12, **dadurch gekennzeichnet, dass** ein zentrischer Bereich der Verschlusskappe (35) von einer Ausnehmung (37) durchsetzt ist.

14. Vorrichtung (10) nach einem der vorhergehenden Ansprüche, **dadurch gekennzeichnet, dass** an dem Abschlussstück (22) eine Aufnahme (42) ausgebildet ist, in der ein Aufhängebügel (41) anbringbar ist, mit dem die Vorrichtung (10) im montierten Zustand aufgehängt werden kann.

## Claims

1. Device (10) for cooking a food, in particular a mass to be cooked, which has egg and/or egg sub-fractions or is formed from these components, comprising
an elongated outer tube (12) which can be closed at its lower end (13), an elongate inner tube (16), the outer diameter of which is smaller than the inner diameter of the outer tube (12), so that the inner tube (16) can be inserted into the outer tube (12) in the longitudinal direction, thereby forming an annular gap (20) between the inner tube (16) and the outer tube (12), and
an end piece (22) which can be placed on an open upper end (14) of the outer tube (12) and fastened thereto, wherein in a front side of the end piece (22) at least one aperture (25) is formed, which is aligned with the annular gap (20) formed between the inner tube (16) and the outer tube (12) in such a way that the annular gap (20), when the end piece (22) is placed on the upper end (14) of the outer tube (12), can be filled from the outside through the aperture (25).
**characterised in**
**that** the end piece (22) is cup-shaped and thus open on its upper side, vertical bulkheads (26) being provided in an inner region of the end piece (22), and
**that** a plurality of passage openings (25) are formed in the front side of the end piece (22), which openings are aligned with the annular gap (20) formed between the inner tube (16) and the outer tube (12), wherein at least one passage opening (25) is fluidically separated from the other passage openings (25) by the bulkheads (26), so that this passage opening (25) fulfils the function of a ventilation opening when the annular gap (20) is filled with a mass to be cooked through the other passage openings (25).

2. Device (10) according to claim 1, **characterised in that** the inner tube (16), when the end piece (22) is placed on the upper end (14) of the outer tube (12), is held centrally within the outer tube (12) by the end piece (22).

3. Device (10) according to claim 2, **characterised in that** the end piece (22) has a centric guide opening (24) in its front side, the inside diameter of which is adapted to the outside diameter of the inner tube (16), wherein the inner tube (16) has a greater length than the outer tube (12) and the inner tube (16), when it is inserted into the outer tube (12), protrudes upwards out of the outer tube (12) and being enclosed by the centric guide opening (24).

4. Device (10) according to claim 3, **characterised in that** the inner tube (16), when it is held centrally within the outer tube (12), can be removed upwards out of the outer tube (12) through the centric guide opening (24) of the end piece (22).

5. Device (10) according to one of the preceding claims, **characterised in that** at least one receiving opening (28) is formed in the front side of the end piece (22), in which a thermocouple or a float can be inserted and thereby projects into the annular gap (20) formed between the inner tube (16) and the outer tube (12).

6. Device (10) according to one of the preceding claims, **characterised in that** bayonet pins (30) are formed on a lower side of the end piece (22), which bayonet pins can be brought into engagement with bayonet recesses (31) formed adjacent to an upper edge region of the outer tube (12) in order to connect the end piece (22) and the outer tube (12) with each other.

7. Device (10) according to one of the preceding claims, **characterised in that** an annular element (32) can be attached to a lower end (13) of the outer tube (12), the inner diameter of which is adapted to the outer diameter of the outer tube (12).

8. Device (10) according to claim 7, **characterised in that** an edge region (R) at the lower end (13) of the outer tube (12) is flanged, so that the ring element (32), when it is applied to the outer tube (12) from the upper end (14), sits on the flanged edge region (R) of the outer tube (12) with a chamfer (33) formed on its inner circumferential surface.

9. Device (10) according to claim 7 or 8, **characterised in that** the lower open end (13) of the outer tube (12) can be closed by a closure cap (35), wherein the closure cap (35) is cup-shaped and has an internal thread (36) on its inner circumferential surface, which can be screwed to an external thread (34) formed on an outer circumferential surface of the ring element (32).

10. Device (10) according to claim 9, **characterised in that** a disc-shaped sealing element (38) is inserted between the sealing cap (35) and the lower end (13) of the outer tube (12) when the ring element (32) is applied thereto.

11. Device (10) according to claim 10, **characterised in that** an annular elevation (39) is formed in a central region of the sealing element (38) on a side facing the inner tube (16), the diameter of which is adapted to an inner diameter of the inner tube (16), so that the inner tube (16), when it is inserted into the outer tube (12), sits with its lower end (17) on the elevation (39) and is thereby held centrally within the outer tube (12), preferably **in that** the annular elevation (39) is conical at its outer circumference, so that the outer diameter of this annular elevation (39) decreases upwards starting from the surface of the sealing element (38).

12. Device (10) according to one of claims 9 to 11, **characterised in that** a plurality of knobs (40) are formed on an underside of the sealing cap (35), which knobs project from the underside, preferably **in that** the knobs (40) are arranged on the underside of the sealing cap (35) adjacent to the outer circumference thereof at uniform distances from one another.

13. Device (10) according to one of claims 9 to 12, **characterised in that** a central region of the sealing cap (35) is penetrated by a recess (37).

14. Device (10) according to one of the preceding claims, **characterised in that** a receptacle (42) is formed on the end piece (22), in which a suspension bracket (41) can be attached, with which the device (10) can be suspended in the assembled state.

## Revendications

1. Dispositif (10) pour la cuisson d'un aliment, en particulier d'une masse à cuire, qui présente des oeufs et/ou des fractions partielles d'oeufs ou qui est formée de ces composants, comprenant
un tube extérieur allongé (12) qui peut être fermé à son extrémité inférieure (13),
un tube intérieur allongé (16) dont le diamètre extérieur est inférieur au diamètre intérieur du tube extérieur (12), de sorte que le tube intérieur (16) peut être inséré dans le tube extérieur (12) dans le sens longitudinal et qu'il se forme alors un interstice annulaire (20) entre le tube intérieur (16) et le tube extérieur (12), et
une pièce de fermeture (22), qui peut être placée sur une extrémité supérieure ouverte (14) du tube extérieur (12) et y être fixée, au moins une ouverture de passage (25) étant formée dans une face frontale de la pièce de fermeture (22), qui est alignée avec l'interstice annulaire (20) formée entre le tube intérieur (16) et le tube extérieur (12), de telle sorte que l'interstice annulaire (20), lorsque la pièce de fermeture (22) est placée sur l'extrémité supérieure (14) du tube extérieur (12), peut être remplie de l'extérieur par l'ouverture de passage (25),
**caractérisé en ce**
**que** la pièce de fermeture (22) est réalisée en forme de godet et donc ouverte sur son côté supérieur, des cloisons verticales (26) étant prévues dans une zone intérieure de la pièce de fermeture (22), et
**que** dans la face frontale de la pièce de fermeture (22) sont formées une pluralité d'ouvertures de passage (25) qui sont alignées avec l'interstice annulaire (20) formée entre le tube intérieur (16) et le tube extérieur (12), au moins une ouverture de passage (25) étant délimitée du point de vue de la technique des fluides par les cloisons (26) par rapport aux autres ouvertures de passage (25), de sorte que cette ouverture de passage (25) remplit la fonction d'une ouverture d'aération lorsque l'interstice annulaire (20) est rempli par les autres ouvertures de passage (25) avec une masse à cuire.

2. Dispositif (10) selon la revendication 1, **caractérisé en ce que**, lorsque la pièce de fermeture (22) est placée sur l'extrémité supérieure (14) du tube extérieur (12), le tube intérieur (16) est maintenu de manière centrée à l'intérieur du tube extérieur (12) par la pièce de fermeture (22).

3. Dispositif (10) selon la revendication 2, **caractérisé en ce que** la pièce de fermeture (22) présente dans sa face frontale une ouverture de guidage centrée (24) dont le diamètre intérieur est adapté au diamètre extérieur du tube intérieur (16), le tube intérieur (16) ayant une longueur supérieure à celle du tube extérieur (12) et le tube intérieur (16), lorsqu'il est inséré dans le tube extérieur (12), faisant saillie vers le haut hors du tube extérieur (12) tout en étant entouré par l'ouverture de guidage centrée (24).

4. Dispositif (10) selon la revendication 3, **caractérisé en ce que** le tube intérieur (16), lorsqu'il est maintenu de manière centrée à l'intérieur du tube extérieur (12), peut être retiré du tube extérieur (12) vers le haut à travers l'ouverture de guidage centrée (24) de la pièce de fermeture (22).

5. Dispositif (10) selon l'une des revendications précédentes, **caractérisé en ce qu'**au moins une ouverture de réception (28) est formée dans la face frontale de la pièce de fermeture (22), dans laquelle un thermocouple ou un flotteur peut être inséré et ainsi pénétrer dans l'interstice annulaire (20) formée entre le tube intérieur (16) et le tube extérieur (12).

6. Dispositif (10) selon l'une quelconque des revendications précédentes, **caractérisé en ce que** des tenons à baïonnette (30) sont formés sur un côté inférieur de la pièce de fermeture (22), lesquels peuvent être mis en prise avec des évidements à baïonnette (31) formés de manière adjacente à une zone de bord supérieure du tube extérieur (12), afin de relier ainsi la pièce de fermeture (22) et le tube extérieur (12).

7. Dispositif (10) selon l'une des revendications précédentes, **caractérisé en ce qu'**à une extrémité inférieure (13) du tube extérieur (12) peut être monté un élément annulaire (32) dont le diamètre intérieur est adapté au diamètre extérieur du tube extérieur (12).

8. Dispositif (10) selon la revendication 7, **caractérisé en ce qu'**une zone de bord (R) est rabattue à l'extrémité inférieure (13) du tube extérieur (12), de sorte que l'élément annulaire (32), lorsqu'il est appliqué sur le tube extérieur (12) à partir de l'extrémité supérieure (14), repose avec un chanfrein (33) formé sur sa surface périphérique intérieure sur la zone de bord rabattue (R) du tube extérieur (12).

9. Dispositif (10) selon la revendication 7 ou 8, **caractérisé en ce que** l'extrémité ouverte inférieure (13) du tube extérieur (12) peut être fermée par un capuchon de fermeture (35), le capuchon de fermeture (35) étant réalisé en forme de godet et présentant sur sa surface périphérique intérieure un filetage intérieur (36) qui peut être vissé avec un filetage extérieur (34) qui est réalisé sur une surface périphérique extérieure de l'élément annulaire (32).

10. Dispositif (10) selon la revendication 9, **caractérisé en ce qu'**un élément d'étanchéité (38) en forme de disque est inséré entre le capuchon de fermeture (35) et l'extrémité inférieure (13) du tube extérieur (12) lorsque l'élément annulaire (32) est appliqué sur celui-ci.

11. Dispositif (10) selon la revendication 10, **caractérisé en ce que** dans une zone centrale de l'élément d'étanchéité (38), sur un côté tourné vers le tube intérieur (16), est formé un relief annulaire (39) dont le diamètre est adapté à un diamètre intérieur du tube intérieur (16), de sorte que le tube intérieur (16), lorsqu'il est inséré dans le tube extérieur (12), repose avec son extrémité inférieure (17) sur le relief (39) et est ainsi maintenu de manière centrée à l'intérieur du tube extérieur (12), de préférence **en ce que** le relief annulaire (39) est de forme conique sur sa périphérie extérieure, de sorte que le diamètre extérieur de ce relief annulaire (39) diminue vers le haut en partant de la surface de l'élément d'étanchéité (38).

12. Dispositif (10) selon l'une quelconque des revendications 9 à 11, **caractérisé en ce qu'**une pluralité de picots (40) sont formés sur une face inférieure du capuchon de fermeture (35) et font saillie à partir de la face inférieure, de préférence **en ce que** les picots (40) sont disposés sur la face inférieure du capuchon de fermeture (35), de manière adjacente à la périphérie extérieure de celui-ci, à intervalles réguliers les uns des autres.

13. Dispositif (10) selon l'une des revendications 9 à 12, **caractérisé en ce qu'**une zone centrale du capuchon de fermeture (35) est traversée par un évidement (37).

14. Dispositif (10) selon l'une des revendications précédentes, **caractérisé en ce qu'**un logement (42) est formé sur la pièce de fermeture (22), dans lequel un étrier de suspension (41) peut être monté, avec lequel le dispositif (10) peut être suspendu à l'état monté.
